Europäisches Patentamt

European Patent Office

Office européen des brevets

(19)

(11) Publication number: **0 184 897**
**A1**

(12) # EUROPEAN PATENT APPLICATION

(21) Application number: 85307437.5

(51) Int. Cl.⁴: **C 03 B 37/16,** H 02 G 1/12

(22) Date of filing: 16.10.85

(30) Priority: 11.12.84 GB 8431223

(71) Applicant: **ABECO LIMITED, Timber Lane Woburn, Milton Keynes Bedfordshire, MK17 9PL (GB)**

(43) Date of publication of application: 18.06.86 **Bulletin 86/25**

(72) Inventor: **Bieganski, Zdzislaw, 'Brushwood' Kinsbourne Green, Harpenden, Hertfordshire (GB)**

(84) Designated Contracting States: **AT BE CH DE FR GB IT LI LU NL SE**

(74) Representative: **Hands, Horace Geoffrey et al, GEORGE FUERY & CO Whitehall Chambers 23 Colmore Row, Birmingham B3 2BL (GB)**

(54) Cable stripper.

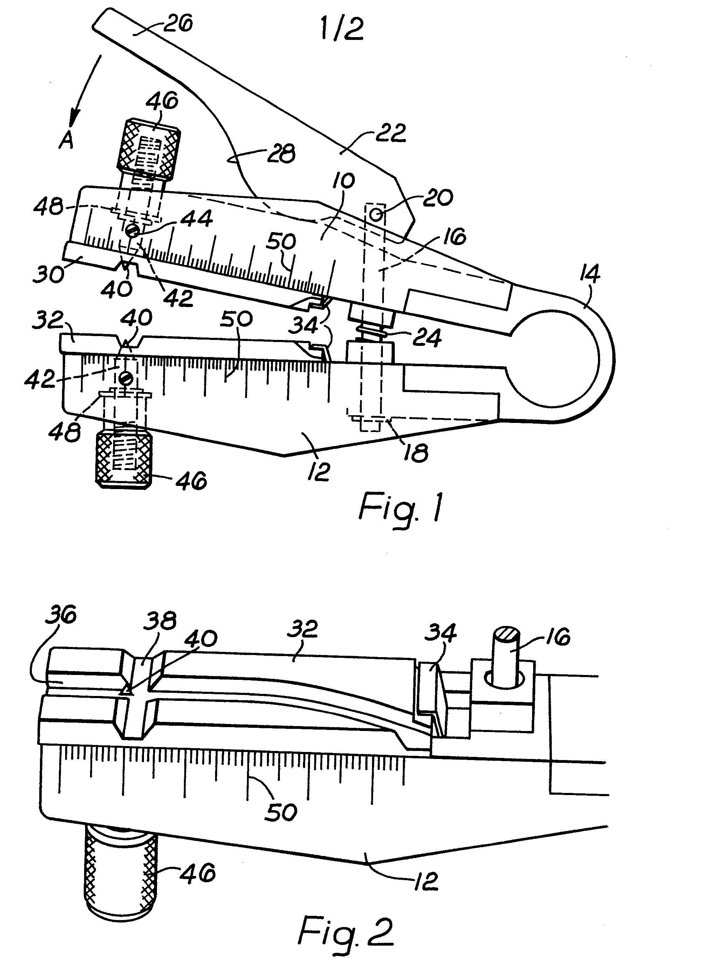

(57) A stripper for optic cable (Figure 1) comprises a pair of lever-like members (10, 12) each carrying a cutter (40) and means for closing them together upon the cable, with guide channels (36, 38) provided in the adjacent jaw faces (30, 32) of the members. Two guide channels (36, 38) are provided, namely a first transverse one (38) in which the cable is located when a peripheral cut is to be made by relative rotation of the tool and cable, and a second longitudinally extending channel (36) in which the cable is located when the same blade (40) is to make an axial cut by relative axial movement between the tool and cable, prior to peeling the sheath from the cable.

1.

## CABLE STRIPPER

This invention relates to tools for stripping cable.

EP 0 018 158 shows a cable stripper having an aperture in which a cable can be located and a blade which projects into that aperture for cutting into the sheath of the cable, so that by relative rotation between the cable and tool, a peripheral cut can be made to separate the sheath from the core, and so that subsequent axial movement allows the sheath to be displaced and stripped from the cable.

The arrangement in the mentioned EP was specifically designed for co-axial cable but in any case is unsatisfactory with certain cables especially optical cables, where the sheath is not readily displaced relative to the core and requires to be peeled off.

GB 2 133 226 A shows a cable stripper, in which the cutter blade can be turned through 90° relative to the plane of the aperture which receives the cable, enabling first a peripheral cut to be made by relative rotation, and then an axial cut to be made by relative axial movement. This facilitates the peeling off of the sheath.

It is also known for example from EPO 0 007 699 to provide the cutting blades on each of a pair of jaws which are closed together by generally lever-like members, these jaws being intended to perform the complete peripheral cut, or as much as is necessary to enable the sheath to be separated,

2.

and the stripping, that is to say separation of the sheath from the core by relative axial displacement whilst the jaws are held closed.

Where the cable is an optical cable having a tough sheath of plastics or like material reinforced by longitudinally extending strands of particularly tough material e.g. of the material sold as 'KEVLAR', the known strippers are generally unsatisfactory. Thus, satisfactory separation of the sheaths cannot be effected by the jaws of EPO 0 007 699 without risking damage to the fragile optic fibres below the sheath. Turning the blade in such a cable using the arrangement of GB 2 133 226A may be difficult because of the longitudinally extending fibres, since the blade cannot in practice be a mere point but has to be the tip of a flat blade, and the arrangement of EPO 0 081 158 does not provide any means for making a longitudinal cut (and neither does the other mentioned EP) which is necessary to enable the sheath to be peeled from the core. In any case, even with the GB 2 133 226A, the means for turning the blade to make the longitudinal cut are undesirable complications in the manufacture of the tool.

The object of the invention is to provide a solution which avoids these problems.

According to the invention, a tool for stripping the sheath of an optic cable comprises a pair of lever-like members defining or carrying jaws at one end, and at least one cutter extending adjustably into the inter-jaw space so that when a cable is located between the jaws and the jaws are closed together the cutter may penetrate the sheath, characterised in that the jaws define a first channel extending

3.

between the jaws and generally in the length of the lever-like members, and a second channel extending transversely of the first channel. Preferably the cutter is located in one of the channels and extends slightly into the other of the channels at the intersection.

By these means, a blade-like cutter can be employed which can make the axially extending slit when there is relative movement in the direction of the length of the cable, and can make the encircling peripheral cut when there is the rotation, without needing means for turning the blade relative to the tool.

The invention is more particularly described with reference to the accompanying drawings wherein:-
Figure 1 is an elevation of a preferred embodiment;
Figure 2 is a fragmentary enlarged perspective view of part of the tool shown in Fig.1; and
Figures 3 and 4 are views showing the tool in use.

Referring to the drawings, the tool comprises a pair of lever-like parts 10, 12 which may be pivoted at one end or as illustrated and presently preferred, connected by a flexible link 14.

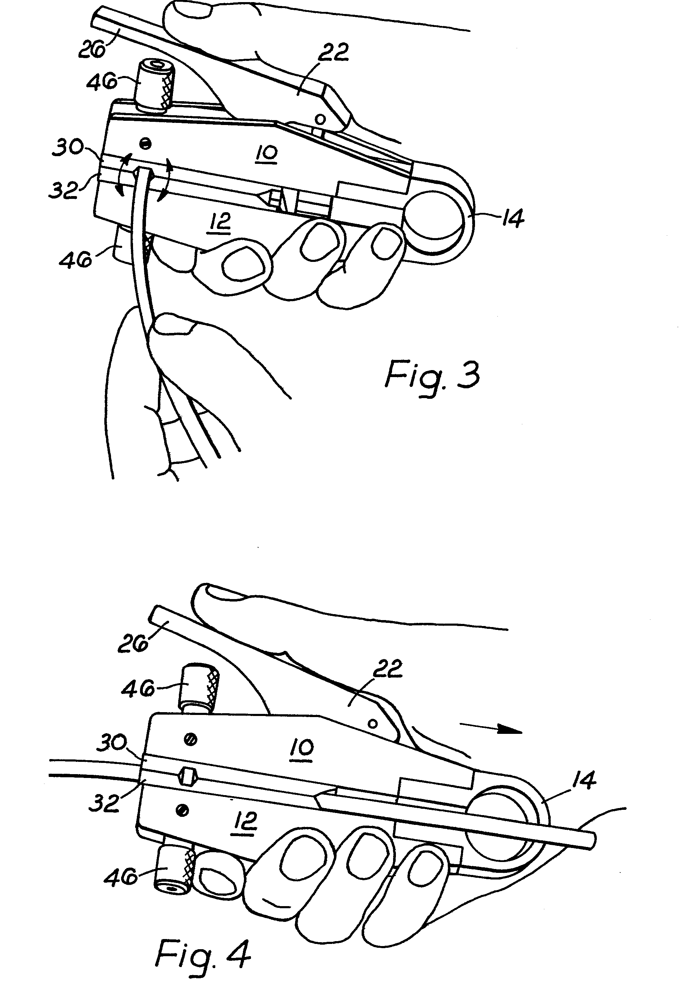

A post 16 extends through bores in the two tools, is rendered axially captive to one by means by a circlip or like 18, and is connected by a pin 20 to a cam handle 22. A compression spring 24 is trapped between the lever-like parts 10, 12. In operation, when the free end 26 of a cam handle is moved in the direction of the arrow A in Figure 1, the cam face 28 acts on the outer surface of the lever handle 10 and urges the parts

4.

together, e.g. to the Figure 3 and 4 position. As shown in Figures 3 and 4, the tool can be grasped in the fingers of one hand and a thumb can displace the lever handle to this effect.

The lever-like members are provided with a pair of jaw pads 30, 32 which are generally the mirror image of one another, and one of which is best seen in Figure 2. The jaw pads may be detachably connected to the lever-like members, being provided with spigot and socket connections near the free ends of the lever members and inter-engaging with the spring clips 34 on the members.

The jaw members each have a first generally longitudinally extending groove or channel 36 formed therein, and a second transverse channel 38 therein. The channel 38 extends across the whole of the width of each pad, and the channel 36 extends from the free ends but is curved slightly to clear the adjacent end edge of the spring clip 34 and emerge laterally as seen in Figure 2.

The cross-sectional shape and dimensions of the channel 38 and 36 are identical on both of the pads. A series of pairs of pads may be provided with different dimensions of channel so as to suit different diameters of optic cable.

Each of the jaws is provided with a cutter blade of flat sheet material with a pointed end, and these blades 40 are held against rotation relative to the tool by being mounted in corresponding carrier stems 42 which have flat lateral faces, these faces being abutted by respective grub screws 44, one on each side of each carrier. The free ends of the carriers are screw-threaded to engage with

5.

screw-tapped bores in adjustment knobs 46. The knobs 46 are axially fast but rotationally free in the respective lever handles, being retained in position by circlips 48 or the like. Hence, rotation of each knob 46 advances or retracts the cutting tip relative to the respective channels.

The blades project through slit-like apertures in the respective pads. The blades can be replaced by separating the engaged screw-threads, and releasing the grub screws 44.

The lever-like members may be calibrated along their lengths as indicated by the reference numeral 50 to give an indication of the position of a cut to be made relative to the end of the cable. By locating the cable so that it extends wholly along the length of the channels 36 extending beyond it at both ends, this cut can be at any desired position.

In operation, the cable is first located as shown in Figure 3 with the blades to make the peripheral cut. It will be observed that the blade is not in the centre of the intersection of the channels, but is offset, so that the cutting edge of both blades extends generally tangentially of the periphery of the cable sheath. The depth of penetration of the cut may be adjusted empirically on a scrap piece of cable by means of the knobs 46. After setting the required depth of cut, and making the required peripheral cut, the cable is repositioned in the manner shown in Figure 4, taking care to engage the pointed ends of the blades in the peripheral cut, and then by relative axial movement, the longitudinally extending or axial cuts are made prior to peeling      . the sheaths from the core.

6.

CLAIMS

1. A tool for stripping the sheath of an optic cable comprises a pair of lever-like members (10,12) defining or carrying jaws at one end, and at least one cutter (40) extending adjustably into the inter-jaw space so that when a cable is located between the jaws and the jaws are closed together the cutter may penetrate the sheath, characterised in that the jaws define a first channel (36) extending between the jaws and generally in the length of the lever-like members, and a second channel (38) extending transversely of the first channel.

2. A tool as claimed in Claim 1 wherein the cutter is located in one of the channels and extends slightly into the other of the channels at the intersection.

3. A tool as claimed in Claim 1 wherein the channels are provided in jaw pads (30, 32) detachably connected to the lever-like members (10,12).

4. A tool as claimed in Claim 1 wherein both lever-like members are provided with cutters (40).

5. A tool as claimed in Claim 1 wherein the cutter (40) comprises a flat blade mounted in a stem (42) held against rotation relative to the lever-like member by releasable means (44) and being screw connected to an adjuster (46).

26

46

A

48

44

28

22

10

20

16

30

40

42

50

14

32

40

50

34

24

42

48

46

12

18

*Fig. 1*

36   38   40   32   34   16

50

46   12

*Fig. 2*

Fig. 3

Fig. 4

**European Patent Office**

## EUROPEAN SEARCH REPORT

Application number

EP 85 30 7437

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 000 079 (SIEMENS & HALSKE) <br> * Whole document * | 1,3,4 | C 03 B 37/16 <br> H 02 G 1/12 |
| X | US-A-3 216 110 (STALLINGS) <br> * Whole document * | 1,3,4 | |
| X | GB-A- 525 691 (ANDERSON) <br> * Whole document * | 1,3,4 | |
| A | US-A-4 188 841 (NAKAMURA) | | |
| A | US-A-4 434 554 (KORBELAK) | | |
| | ----- | | **TECHNICAL FIELDS SEARCHED (Int. Cl.4)** |
| | | | C 03 B 37/00 <br> H 02 G 1/00 |

The present search report has been drawn up for all claims

| Place of search | Date of completion of the search | Examiner |
|---|---|---|
| THE HAGUE | 24-02-1986 | VAN DEN BOSSCHE W.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82